# EUROPEAN PATENT SPECIFICATION

(11) **EP 3 452 771 B1**
(45) Date of publication and mention of the grant of the patent: **31.08.2022**
(21) Application number: 16720123.5
(22) Date of filing: 03.05.2016
(51) Int. Cl.: F24F 1/16, F24F 1/40, F28B 1/06, F28D 1/047, F28D 1/053, F28F 9/00, F28F 17/00, F28F 19/00

(54) **HEAT EXCHANGER ARRANGEMENT**
WÄRMETAUSCHERANORDNUNG
AGENCEMENT D'ÉCHANGEUR THERMIQUE

(43) Date of publication of application: 13.03.2019
(73) Proprietor: Carrier Corporation, Farmington, CT 06034 (US)
(72) Inventor: WALLET-LAILY, Jeremy, 01120 Montluel (FR); RAHHAL, Charbel, 01120 Montluel (FR)
(74) Representative: Schmitt-Nilson Schraud Waibel Wohlfrom Patentanwälte Partnerschaft mbB
(86) International application number: PCT/EP2016/059884
(87) International publication number: WO 2017/190769

(56) References cited:
- EP-A1- 2 851 624
- EP-A2- 0 856 711
- EP-B1- 0 012 782
- DE-A1-102014 226 263
- US-A- 2 268 360
- US-A- 3 384 165
- US-A1- 2004 200 598
- US-A1- 2011 139 410
- US-A1- 2012 279 689
- US-A1- 2015 292 790

## Description

The application is related to a heat exchanger arrangement, in particular to a heat exchanger arrangement to be used in refrigeration circuits, e.g. in heating, ventilating, air conditioning and refrigeration (HVAC/R) systems.

### Prior Art

In refrigeration circuits heat exchangers are used for transferring heat between a circulating refrigerant and the environment.

DE 10 2014 226263 A1 discloses a vibration damping system for a heat exchanger of a vehicle, suitable to be placed between a lateral edge of the heat exchanger and a wall of a housing space. The system comprises a plurality of corner pieces each of which is adapted to be fixed to a corresponding corner of the heat exchanger and comprises a support part of plastic material, equipped with a connecting part adapted to fix an edge part of the heat exchanger for fixing the corner part to the heat exchanger, and a damping part made of elastomeric material supported by the support part and protruding on its opposite sides, intended to fix on one side a lateral edge surface of the heat exchanger and on the opposite side a surface of the wall of the housing space.

US 2004/0200598 A1 discloses a heat exchanger arrangement for a vehicle with the features of the preamble of claim 1.

US 2 268 360 A discloses a heat exchanger arrangement, whereby horizontal upper and lower manifolds are received in respective fixed and loose bearing brackets, so that the heat exchanger is suspended from the support structure.

US 2011/139410 A1 discloses a heat exchanger assembly comprising a microchannel coil and a frame. The frame comprises a slot to position the microchannel coil therein, and a coil attachment connecting the microchannel coil at a first end of the frame.

It would be beneficial to provide a heat exchanger arrangement which provides effective heat exchange, which is easy to install, and which has a long life span.

### Disclosure of the Invention:

A heat exchanger arrangement according to the invention Z r is defined by claim 1, and comprises at least one heat exchanger and a support structure. The at least one heat exchanger has at least one substantially horizontally oriented manifold forming an upper side of the heat exchanger, the at least one manifold having lateral end portions. The support structure has a main portion comprising, at least partially, a metallic material and manifold support portions associated to respective lateral end portions of the at least one manifold. The manifold support portions are made at least partially from a non-metallic material and configured to receive the lateral end portions of the at least one manifold for preventing the at least one manifold from contacting any metallic portions of the support structure.

The manifold support portions of the support structure are provided by non-metallic projections formed at the inner sides of opposing posts of the support structure at a position of height corresponding to the position of height of the at least one manifold and the lateral end portions of the at least one manifold are supported on the respective non-metallic projections. The at least one heat exchanger is in contact with the support structure only via the lateral end portions of the at least one manifold in a suspended configuration in which the at least one heat exchanger is not supported from below.

In a heat exchanger arrangement according to exemplary embodiments of the invention, there is no metal-to-metal contact between the metallic parts of the at least one heat exchanger and metallic portions of the support structure. This avoids corrosion caused by the electrochemical effect which is likely to occur at the interface of two (different) metals.

As there is no need for supporting the at least one heat exchanger from below, the collection and drainage of condensate generated on the surface(s) of the at least one heat exchanger in an area below the heat exchanger(s) 4 is facilitated.

Such configuration further provides a mechanical decoupling between the at least one heat exchanger and the support structure. This results in an effective damping of vibrations. It further allows compensating for thermal dilatation and deformation of the heat exchanger coils.

In a heat exchanger arrangement according to exemplary embodiments of the invention, the heat exchanger in particular is suspended from the support structure by means of the manifold support portions. Given that in this configuration there is no need for supporting heat exchanger(s) from below, installation of the heat exchanger(s) within the support structure is facilitated. It further facilitates collecting and draining condensate generated on the surface(s) of the heat exchanger(s) in an area below the heat exchanger(s).

In a heat exchanger arrangement according to exemplary embodiments of the invention, the number of contact points between the heat exchanger(s) and the support structure is reduced. This also reduces the number areas where water can accumulate/stagnate and therefore water needs to be drained from in order to avoid corrosion.

Exemplary embodiments of the invention also provide a mechanical decoupling between the heat exchanger(s) and the support structure resulting in an effective damping of vibrations. They further allow compensating for thermal dilatation and deformation of the heat exchanger coils.

Below, a heat exchanger arrangement according to an exemplary embodiment of the invention will be described in detail with reference to the appended figures.

### Short Description of the Figures:

Figure 1 shows a perspective view of a heat exchanger arrangement according to an exemplary embodiment of the invention.
Figure 2 shows a lateral sectional view of the heat exchanger arrangement shown in Figure 1.
Figure 3 shows an enlarged sectional view of the area of the heat exchanger arrangement shown in Figures 1 and 2 where a heat exchanger is arranged on a support structure.
Figures 4a to 4f are schematic side views illustrating different shapes of heat exchangers as they may be deployed in heat exchanger arrangements according to exemplary embodiments of the invention.

### Detailed Description of the Figures:

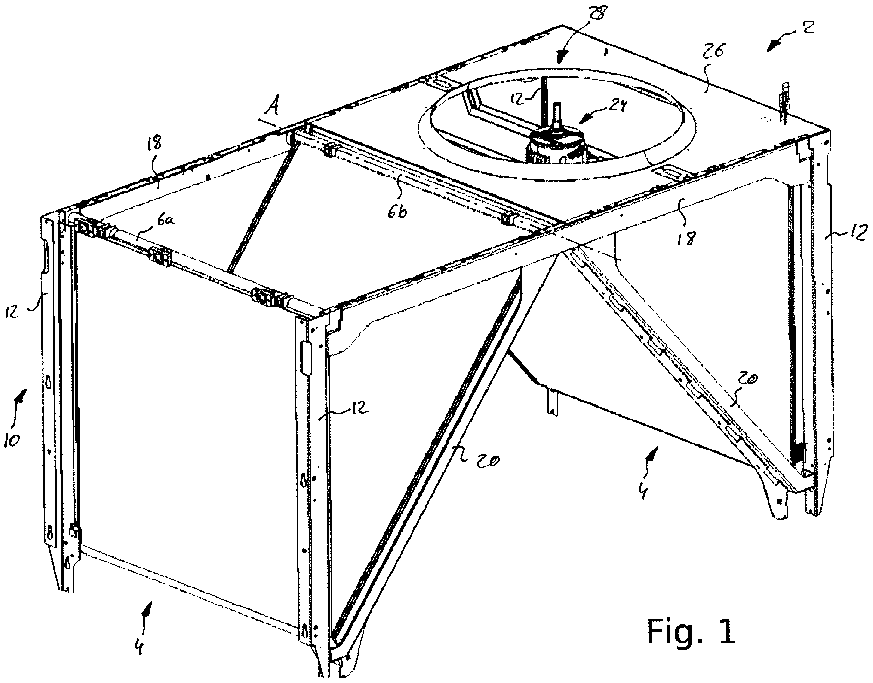

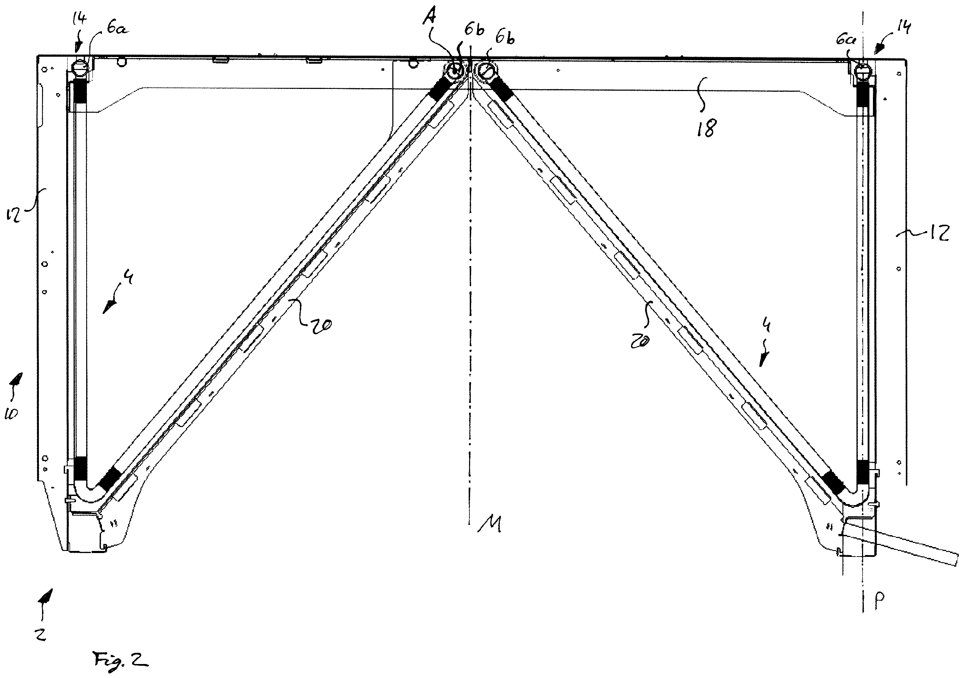

Figure 1 shows a perspective view of a heat exchanger arrangement 2 according to an exemplary embodiment of the invention and Figure 2 shows a lateral sectional view thereof.

The heat exchanger arrangement 2 comprises a support structure 10 provided by a frame consisting of four upright posts 12 and two horizontal beams 18 each connecting upper ends of adjacent upright posts 12.

The support structure 10 further comprises slanted reinforcement struts 20. Each slanted reinforcement strut 20 connects an upright post 12 with a horizontal beam 18 for enhancing the rigidity of the support structure 10.

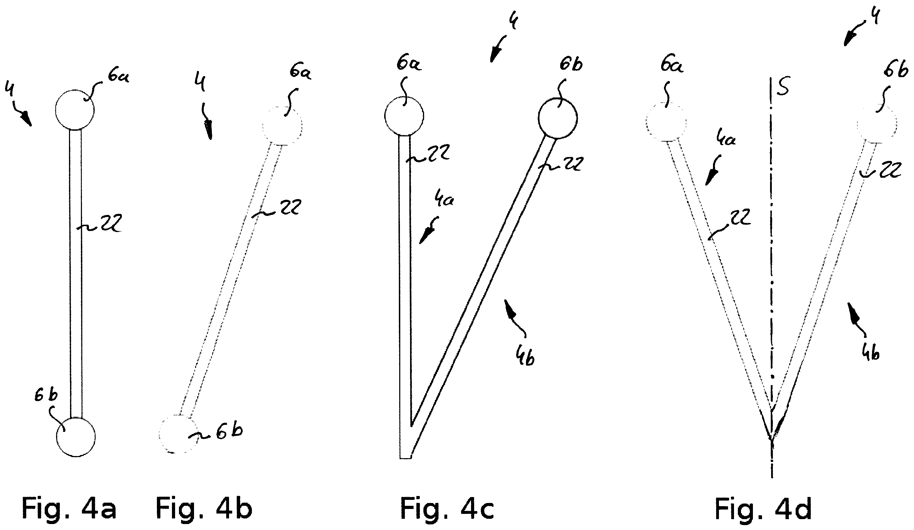

The exemplary embodiment of the heat exchanger arrangement 2 shown in Figures 1 and 2 comprises two V-shaped heat exchangers 4 supported by the support structure 10 that are arranged symmetrically as indicated by dotted line M The V-shape of the heat exchangers 4 will be discussed in more detail further below with reference to Figures 4c and 4d.

As can be seen in Figure1, the heat exchanger arrangement may include cover plates 26 supported by the support structure 10. One cover plate 26 covering the right side of the heat exchanger arrangement 2 is shown in Figure 1. A second cover plate 26, which may be provided for covering the left side of the heat exchanger arrangement 2, is not depicted in Figure 1 for allowing an unobstructed view into the interior of the heat exchanger arrangement 2. The cover plate 26 is provided with an opening 28 having a circular in shape for housing a fan for generating a flow of air passing the heat exchangers 4. Only the motor 24 but not the propeller of the fan is shown in Figure 1.

The upper ends of the heat exchangers 4 are provided with manifolds 6a, 6b, respectively. The plane of projection of Figure 2 is oriented perpendicular to axis A shown in Figure 1, i.e. the manifolds 6a, 6b extend perpendicularly to the plane of projection of Figure 2.

The manifolds 6a, 6b are fluidly connected to tubes 22 of the heat exchangers 4. The tubes 22 of the heat exchangers 4 are not visible in Figures 1 and 2, but in

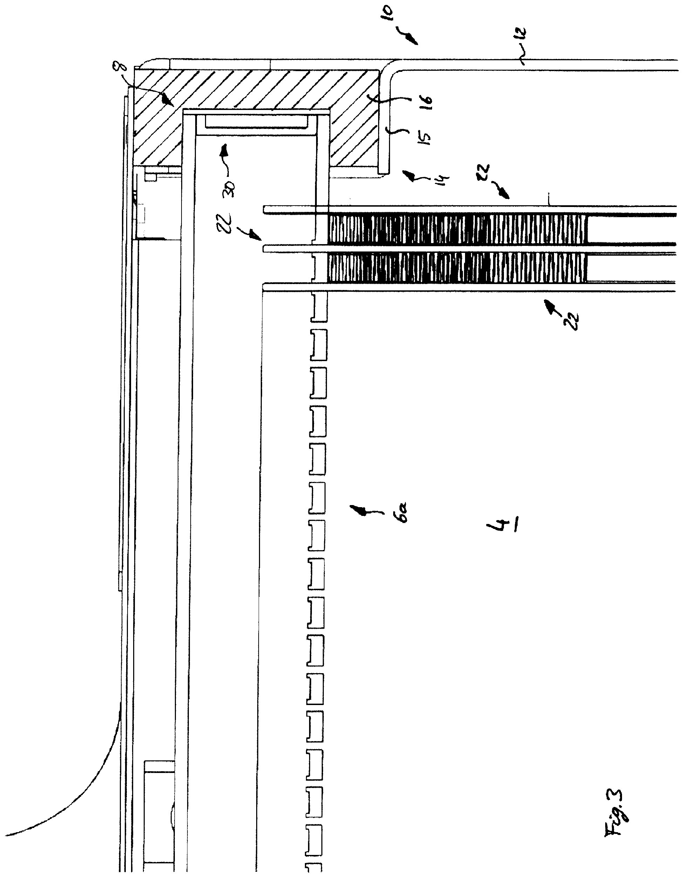

Figure 3. The manifolds 6a, 6b are configured for supplying refrigerant to and collecting refrigerant from said tubes 22, respectively.

Said manifolds 6a, 6b are further configured to connect the heat exchangers 4 with the support structure 10. This is described below in more detail with reference to Figure 3.

Figure 3 shows an enlarged sectional side view of the area in which one of the heat exchangers 4 is connected with the support structure 10, e.g. at the upper right corner of the structure shown in Figure 2. The plane of projection of Figure 3, which is depicted by line P in Figure 2, is oriented perpendicular to the plane of projection of Figure 2.

The heat exchanger 4 comprises a plurality of tubes 22, three of which are depicted in Figure 3. The tubes 22 may be multiport tubes 22 and/or tubes 22 provided with fins for enhancing the heat exchange. The tubes 22 extend between a first manifold 6a and second manifold 6b. The second manifold 6b is not shown in Figure 3. The tubes 22 are fluidly connected with said manifolds 6a, 6b allowing the manifolds 6a, 6b to deliver refrigerant to and to collect refrigerant from said tubes 22.

The manifolds 6a, 6b in particular are provided by hollow pipes extending beyond the lateral edge of the heat exchanger 4 thereby forming lateral end portions 8 protruding from the lateral edges of the heat exchanger 4. The hollow pipes are tightly sealed at both ends by appropriate seals 30, e.g. plugs or caps.

While only the right side of the heat exchanger 4 / manifold 6 is shown in Figure 3, the skilled person will understand that the left side is formed correspondingly.

The support structure 10 comprises manifold support portions 14, only one of which is shown in Figure 3, which are configured to accommodate the lateral end portions 8 of the manifolds 6a, 6b protruding from the lateral edges of the heat exchanger 4.

In the exemplary embodiment shown in Figure 3, the manifold support portion 14 comprises a projection 15 projecting from the inner side of a post 12 of the support structure 10 towards the heat exchanger 4. In an alternative embodiment, which is not shown in the figures, the manifold support portions 14 may be provided by appropriately formed tube segments, which are configured for accommodating the lateral end portions 8 of the manifold 6a.

The manifold support portion 14 further comprises a connection element 16 surrounding the respective lateral end portion 8 of the manifold 6a and connecting the respective lateral end portion 8 with the projection 15 or tube segment (not shown).

The connection element 16 is made of a non-metallic material, e.g. plastic or a rubber material. This avoids any direct contact between the manifold 6a, which usually is made of a metal, and the manifold support portions 14, which usually are also made of metal.

The connection element 16 in particular may be made of an elastic material in order to provide elastic damping between the heat exchanger 4 and the support structure 10 e.g. to decouple vibrations between the heat exchanger 4 and the support structure 10.

In an alternative embodiment which is not shown in the figures, the projections 15 of the manifold support portions 14 themselves may be formed using a non-metallic and/or elastic material such as plastic or rubber. In such an embodiment, no non-metallic connection elements 16 are necessary for preventing direct metal-to-metal contact between the manifold 6a and the projections 15.

The projections 15 and/or the connection elements 16 are formed such that there is no direct or immediate contact between the heat exchanger 4 and the support structure 10. Instead, the heat exchangers 4 are attached to the manifold support portions 14 only by the lateral end portions 8 of the manifolds 6a, 6b and via the (optional) connection elements 16.

Such suspended configuration prevents any direct metal-to-metal contact between the metallic heat exchanger 4 and the metallic support structure 10 and there is no need of additionally supporting the heat exchanger 4. The heat exchanger 4 in particular does not need to be supported from below.

As there is no need for supporting the heat exchanger(s) 4 from below, the collection and drainage of condensate generated on the surface(s) of the heat exchanger(s) 4 in an area below the heat exchanger(s) 4 is facilitated.

Such configuration further provides a mechanical decoupling between the heat exchanger(s) 4 and the support structure 10. This results in an effective damping of vibrations. It further allows compensating for thermal dilatation and deformation of the heat exchanger coils 22.

Figures 4a to 4f are schematic side views illustrating examples of different shapes of heat exchangers 4 as they may be deployed in heat exchanger arrangements 2 according to exemplary embodiments of the invention. In order to achieve an efficient heat exchange, the shapes, in particular the geometries, angles, and dimensions, of the heat exchangers 4 are designed to optimize an almost homogeneous distribution of the air flowing along the surface of heat exchangers 4. The skilled person will understand that the examples shown in Figures 4a to 4f are not exhaustive and that heat exchangers 4 having other shapes may be used as well.

Each of the heat exchangers 4 shown in Figures 4a to 4f comprises a plurality of tubes 22 arranged parallel to each other in a plane extending perpendicular to the plane of projection of Figures 4a to 4f. Therefore, only the first (front most) tube of the plurality of tubes 22 is visible in each of Figures 4a to 4f.

Figure 4a illustrates a shape of a heat exchanger 4 in which the plurality of tubes 22 of the heat exchanger 4 have an I-shape, when seen in a side view, extending vertically from a first (upper) manifold 6a to a second (lower) manifold 6b.

Such an I-shaped heat exchanger 4 also may be oriented in a slanted orientation with respect to the vertical, as it is depicted in Figure 4b.

Figure 4c depicts a heat exchanger 4 having a V-shape, as it is employed in the heat exchanger assembly 2 shown in Figures 1 and 2. The heat exchanger 4 shown in Figure 4c in particular includes a first portion 4a extending along a vertical plane down from the first manifold 6a, and a second portion 4b, which is inclined with respect to said vertical plane. The second portion 4b may be inclined at angle of 30° to 60°, particularly at an angle between 40° and 50°, with respect to the vertical plane. A second manifold 6b is arranged at the upper end of the second portion 4b. The first and second portions 4a, 4b are fluidly connected to each other at their respective lower ends allowing refrigerant to transfer between the two portions 4a, 4b.

Figure 4d depicts an alternative V-shaped heat exchanger 4, which is designed symmetrical to a vertically extending plane of symmetry S.

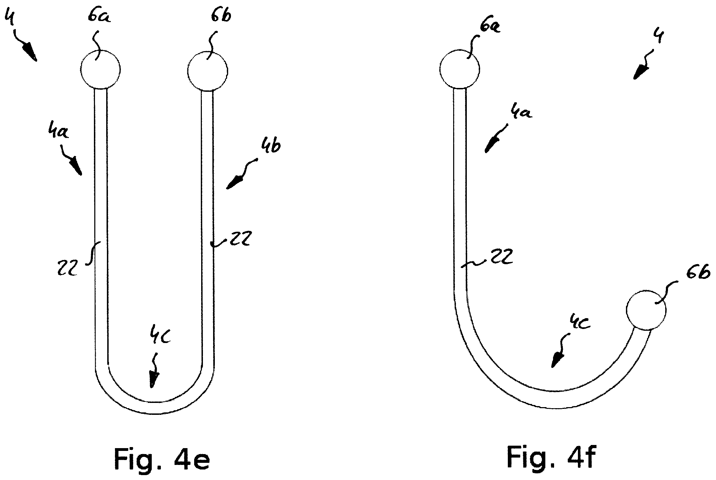

Figure 4e depicts a heat exchanger 4 having a U-form comprising two basically vertical portions 4a, 4b respectively extending downwards from an upper manifold 6a, 6b and an arcuate connection portion 4c fluidly connecting the lower ends of the two vertical portions 4a, 4b.

In the embodiment shown in Figure 4e, the two manifolds 6a, 6b connected to the upper ends of the vertical portions 4a, 4b of the heat exchanger 4 are arranged at the same height. This, however, is only exemplary. Generally, the manifolds 6a, 6b / upper ends of the vertical portions 4a, 4b of the heat exchanger 4 may be arranged at different heights as well.

Figure 4f illustrates another example, in which the second vertical portion 4b is omitted and the second manifold 6b is attached directly to an upper end of the arched portion opposite to the first vertical portion 4a.

In further embodiments, which are not shown in the Figures, the arcuate portion 4c may extend further to a different height, and/or an inclined second portion 4b, as it is shown in Figure 4c, may be connected to the end of the arcuate portion 4c opposite to the first portion 4a.

In all embodiments, the refrigerant may flow in parallel through all the tubes 22 from the first manifold 6a to the second manifold 6b, or vice versa.

Alternatively, the manifolds 6a, 6b may be divided into at least two sections, respectively, by providing appropriate dividing walls formed within the manifolds 6a, 6b. Each of said sections may fluidly connect a group of adjacent tubes 22. Such configuration allows the refrigerant to meander in a counter flow direction through the heat exchanger 4. I.e. the refrigerant may flow through a first group of the tubes 22 from the first manifold 6a to the second manifold 6b in a first direction, and through a second group of the tubes 22 from the second manifold 6b back to the first manifold 6a in a second direction, opposite to the first direction. By dividing the manifolds 6a, 6b into more than two sections, additional flow paths may be added for providing a multi-flow configuration.

In a configuration in which at least one manifold comprises at least one dividing wall, the inlet and the outlet of the heat exchanger 4 may be provided at the same of the two manifolds 6a, 6b on opposite sides of the at least one dividing wall. Alternatively, the inlet may be provided at a first one of the manifolds 6a, 6b while the outlet is provided at the second one of the manifolds 6b, 6a.

### Further Embodiments:

A number of optional features are set out below. These features may be realized in particular embodiments, alone or in combination with any of the other features. In one embodiment, the manifold support portions comprise non-metallic connection elements, and the manifold support portions are configured to receive the lateral end portions of the at least one manifold via the respective connection elements for preventing the at least one manifold from contacting any metallic portions of the support structure.

The manifold support portions of the support structure in particular may comprise metallic or non-metallic projections located at the inner sides of opposing posts of the support structure at a vertical position corresponding to the vertical position of the at least one manifold and non-metallic connection elements arranged between the respective metallic or non-metallic projections and/or associated with the lateral end portions of the at least one manifold. The lateral end portions of the at least one manifold are in particular received by the respective metallic or non-metallic projections via respective non-metallic connection elements.

Such a configuration allows avoiding direct metal-to-metal contact which may cause corrosion due to the electrochemical effect, even in case metallic projections are used for connecting the heat exchangers to the support structure. Using metallic projections for connecting the heat exchangers may facilitate the construction and/or manufacturing of the support structure.

In another embodiment, the heat exchanger and the support structure are connected only via the lateral end portions of the at least one manifold and otherwise remain spaced apart, i.e. no direct contact is made. This reliably prevents corrosion caused or enhanced by the electrochemical effect.

In another embodiment, the support structure may comprise a plurality, in particular four, upright posts and a plurality, in particular four, horizontal beams to connect adjacent upper ends of the upright posts. Such a configuration provides a support structure with high rigidity at low costs.

In another embodiment, the support structure may additionally comprise slanted reinforcement struts, each slanted reinforcement strut connecting an upright post with a horizontal beam. Providing such reinforcement struts enhances the rigidity of the support structure even further.

In another embodiment, the heat exchanger may comprise first and second manifolds and a plurality of tubes, in particular multiport tubes and/or tubes provided with fins, extending between the first and second manifolds and being fluidly connected with the first and second manifolds. In such a configuration the manifolds allow for efficiently distributing the refrigerant to and for efficiently collecting the refrigerant from the plurality of tubes, respectively.

In another embodiment, the first and second manifolds and the plurality of tubes may have an I-shape, when seen in a vertical cross-section. The first manifold may form an upper manifold and the second manifold may form a lower manifold. The lateral end portions of the upper manifold may be connected with respective manifold support portions of the support structure located at upper end portions of the inner sides of opposing posts of the support structure. The plurality of tubes may in particular extend in a substantially vertical direction. Such a configuration provides a simple heat exchanger which is easy to install and which may be produced at low costs.

In another embodiment, the first and second manifolds and the plurality of tubes may have a V-shape or a U-shape, when seen in a vertical cross-section. The first manifold may provide a left upper manifold arranged at the left upper end of the heat exchanger, and the second manifold may provide a right upper manifold arranged at the right upper end of the heat exchanger. The lateral end portions of the left upper manifold may be connected with respective manifold support portions of the support structure located at upper end portions of the inner sides of opposing posts or beams of the support structure; and the lateral end portions of the right upper manifold may be connected with respective manifold support portions of the support structure located at upper end portions of the inner sides of opposing posts or beams of the support structure.

A heat exchanger comprising tubes having a V-shape or a U-shape provides a large heat-transfer surface allowing for a very effective heat transfer. Installing such a heat exchanger by means of left and right upper manifolds allows for an easy installation and reliable connection of the heat exchanger with the support structure.

In another embodiment, the plurality of tubes having a V-shape may comprise a first, substantially vertical portion and a second portion, which is inclined with respect to the first portion. The first and second sections may be fluidly connected at their respective lower ends. The second inclined portion in particular may be oriented at an angle of 30° to 60°, particularly between 40° and 50°, more particularly at an angle of 45° with respect to the first portion. Such a configuration allows for an effective use of the available space for providing a heat transfer surface which is as large as possible under the given conditions.

In another embodiment, the plurality of tubes having a U-shape may comprise a first and second substantially vertical portion which are fluidly connected by an appropriately rounded/arched connection portion at their lower ends such that the first and second substantially vertical portions are substantially parallel to each other. Such a configuration allows for an effective use of the available space in order to provide a heat transfer surface which is as large as possible.

In another embodiment, the plurality of tubes may have a J-shape, when seen in a vertical cross-section. In this embodiment a first manifold forms an upper manifold and a second manifold forms a lower manifold. The lateral end portions of the upper manifold are connected with respective manifold support portions of the support structure located at upper end portions of the inner sides of opposing posts of the support structure, and the lateral end portions of the lower manifold are connected with respective manifold support portions of the support structure located at intermediate portions of the inner sides of opposing posts of the support structure. The plurality of tubes in particular may comprise a first, substantially vertical portion and a second, rounded portion which is fluidly connected to the lower end of the first portion.

In another, embodiment the heat exchanger arrangement may comprise at least two heat exchangers which are suspended in a common support structure. The heat exchanger arrangement in particular may comprise two V-shaped heat exchangers which are arranged such that their inclined sections face each other. Alternatively, the heat exchanger arrangement may comprise two J-shaped heat exchangers which are arranged such that their rounded sections face each other. Such configurations allow for a very effective use of the available space.

In another embodiment, one of the manifolds may comprise an inlet port and an outlet port, with an inner wall of the manifold subdividing a first space associated with the inlet port and a second space associated with the outlet port. This allows for a counter flow configuration in which the refrigerant flows through a first portion of the plurality of tubes in a first direction through the heat exchanger, and through a second portion of the plurality of tubes in a second, opposite direction through the heat exchanger. Such a configuration may enhance the efficiency of the heat transfer. Providing the inlet port and an outlet port at the same manifold may facilitate the installation of the heat exchanger; in particular less piping might be necessary.

In another embodiment, the heat exchanger arrangement may further comprise at least one fan arranged at or on the support structure. The at least one fan in particular may be arranged horizontally between opposing horizontal beams of the support structure. More particularly, it may be located above an inclined portion of a V-shaped heat exchanger or above a rounded portion of a J-shaped or U-shaped heat exchanger in order to enhance the heat exchange by blowing air through and/or along the surface of the heat exchanger.

In another embodiment, the at least one manifold and/or the tubes are at least partially made of metal, particularly aluminum or an aluminum alloy. Aluminum is a light material and has a high thermal conductivity. Therefore, it allows providing an efficient yet lightweight heat exchanger.

While the invention has been described with reference to exemplary embodiments, it is intended that the invention is not limited to the particular embodiment disclosed, but that the invention does include all embodiments falling within the scope of the appended claims.

### References

- 2: heat exchanger arrangement
- 4: heart exchanger
- 4a: first portion of the heart exchanger
- 4b: second portion of the heart exchanger
- 4c: connecting portion of the heart exchanger
- 6a: first manifold
- 6b: second manifold
- 8: lateral end portion
- 10: support structure
- 12: post
- 14: manifold support portion
- 15: projection
- 16: connection element
- 18: horizontal beam
- 20: reinforcement strut
- 22: tube
- 24: fan motor
- 26: top plate
- 28: circular opening
- 30: seal

- A: axis of a manifold
- M: mirror plane
- P: plane of projection of Figure 3 indicated in Figure 2
- S: symmetry plane of a V-shaped heat-exchanger

## Claims

1. Heat exchanger arrangement (2) comprising:
at least one heat exchanger (4) including at least one substantially horizontal manifold (6a, 6b) forming an upper side of the at least one heat exchanger (4), the at least one manifold (6a, 6b) having lateral end portions (8) and
a support structure (10) including
a main portion comprising, at least partially, a metallic material, and
manifold support portions (14) associated to respective lateral end portions (8) of the at least one manifold (6a, 6b);
wherein the manifold support portions (14) are made at least partially from a non-metallic material and configured to receive the lateral end portions (8) of the at least one manifold (6a, 6b) for preventing the at least one manifold (6a, 6b) from contacting any metallic portions of the support structure (10);
wherein the manifold support portions (14) of the support structure (10) are formed as non-metallic projections (15) located at the inner sides of opposing posts (12) of the support structure (10) at a vertical position corresponding to the vertical position of the at least one manifold (6a, 6b) and the lateral end portions (8) of the at least one manifold (6a, 6b) are supported on the respective non-metallic projections (15); and
**characterised in that**
the at least one heat exchanger (4) is in contact with the support structure (10) only via the lateral end portions (8) of the at least one manifold (6a, 6b) in a suspended configuration in which the at least one heat exchanger (4) is not supported from below.

2. Heat exchanger arrangement (2) according to any of the preceding claims, wherein the support structure (10) comprises upright posts (12), in particular four upright posts (12), and horizontal beams (18) respectively connecting adjacent upper ends of the four upright posts (12).

3. Heat exchanger arrangement (2) according to any of the preceding claims, wherein the support structure (10) further comprises slanted reinforcement struts (20), each slanted reinforcement strut (20) connecting an upright post (12) with a horizontal beam (18).

4. Heat exchanger arrangement (2) according to any of the preceding claims,
wherein the at least one heat exchanger (4) comprises a first manifold (6a), a second manifold (6b) and a plurality of tubes (22), particularly multiport tubes and/ or tubes provided with fins, the plurality of tubes (22) extending between the first manifold (6a) and the second manifold (6b) and being fluidly connected with the first and second manifolds (6a, 6b).

5. Heat exchanger arrangement (2) according to claim 4,
wherein the plurality of tubes (22) have an I-shape, when seen in a vertical cross-section;
wherein the first manifold (6a) forms an upper manifold (6a) and the second manifold (6b) forms a lower manifold (6b); and
wherein the lateral end portions (8) of the upper manifold (6a) are connected with respective manifold support portions (14) of the support structure (10) located at upper end portions (8) of the inner sides of opposing posts of the support structure (10).

6. Heat exchanger arrangement (2) according to claim 4,
wherein the plurality of tubes (22) have a V-shape or a U-shape, when seen in a vertical cross-section;
wherein the first manifold (6a) forms a left upper manifold (6a) and the second manifold (6b) forms a right upper manifold (6b);
wherein the lateral end portions (8) of the left upper manifold (6a) are connected with respective manifold support portions (14) of the support structure (10) located at upper end portions (8) of the inner sides of opposing posts or beams of the support structure (10); and
wherein the lateral end portions (8) of the right upper manifold (6b) are connected with respective manifold support portions (14) of the support structure (10) located at upper end portions (8) of the inner sides of opposing posts or beams of the support structure (10).

7. Heat exchanger arrangement (2) according to claim 4,
wherein the plurality of tubes (22) have a J-shape, when seen in a vertical cross-section;
wherein the first manifold (6a) forms an upper manifold (6a) and the second manifold (6b) forms a lower manifold (6b);
wherein the lateral end portions (8) of the upper manifold (6a) are connected with respective manifold support portions (14) of the support structure (10) located at upper end portions (8) of the inner sides of opposing posts of the support structure (10); and
wherein the lateral end portions (8) of the lower manifold (6b) are connected with respective manifold support portions (14) of the support structure (10) located at intermediate portions of the inner sides of opposing posts of the support structure (10).

8. Heat exchanger arrangement (2) according to any of claims 5 to 7,
comprising two heat exchangers (4) suspended in a common support structure (10), particularly two V-shaped heat exchangers (4) arranged such that their inclined sections (4b) face each other or particularly two J-shaped heat exchangers (4) arranged such that their rounded sections (4c) face each other.

9. Heat exchanger arrangement (2) according to any of the preceding claims,
wherein at least one of the manifolds (6a, 6b) comprises an inlet port and an outlet port, with an inner wall provided within the at least one manifold (6a, 6b) subdividing a first space associated with the inlet port and a second space associated with the outlet port.

10. Heat exchanger arrangement (2) according to any of the preceding claims,
further comprising a fan (24) arranged on the support structure (10), particularly in a horizontal fashion between opposing horizontal beams (18) of the support structure (10), and more particularly above an inclined portion (4b) of a V-shaped heat exchanger (4) or above a rounded portion (4c) of a J-shaped or U-shaped heat exchanger (4)

11. Heat exchanger arrangement (2) according to any of the preceding claims,
wherein the at least one manifold (6a, 6b) and/or the tubes (22) are at least partially made of metal, particularly aluminum or an aluminum alloy.

## Patentansprüche

1. Wärmetauscheranordnung (2), die Folgendes umfasst:
mindestens einen Wärmetauscher (4), der mindestens einen im Wesentlichen horizontalen Verteiler (6a, 6b) beinhaltet, der eine obere Seite des mindestens einen Wärmetauschers (4) bildet, wobei der mindestens eine Verteiler (6a, 6b) seitliche Endbereiche (8) und eine Abstützstruktur (10) aufweist, die
einen Hauptbereich, der zumindest teilweise ein metallisches Material umfasst, und
Verteilerabstützbereiche (14), die den jeweiligen seitlichen Endbereichen (8) des mindestens einen Verteilers (6a, 6b) zugeordnet sind, beinhaltet;
wobei die Verteilerabstützbereiche (14) zumindest teilweise aus einem nichtmetallischen Material gefertigt und dazu konfiguriert sind, die seitlichen Endbereiche (8) des mindestens einen Verteilers (6a, 6b) aufzunehmen, um zu verhindern, dass der mindestens eine Verteiler (6a, 6b) einen metallischen Bereich der Abstützstruktur (10) berührt;
wobei die Verteilerabstützbereiche (14) der Abstützstruktur (10) als nichtmetallische Vorsprünge (15) ausgebildet sind, die sich an den Innenseiten von gegenüberliegenden Pfosten (12) der Abstützstruktur (10) an einer vertikalen Position befinden, die der vertikalen Position des mindestens einen Verteilers (6a, 6b) entspricht, und wobei die seitlichen Endbereiche (8) des mindestens eine Verteilers (6a, 6b) auf den jeweiligen nichtmetallischen Vorsprüngen (15) abgestützt sind; und
**dadurch gekennzeichnet, dass**
der mindestens eine Wärmetauscher (4) mit der Abstützstruktur (10) nur über die seitlichen Endbereiche (8) des mindestens einen Verteilers (6a, 6b) in einer aufgehängten Konfiguration, in der der mindestens eine Wärmetauscher (4) nicht von unten abgestützt ist, mit der Abstützstruktur (10) in Kontakt steht.

2. Wärmetauscheranordnung (2) nach einem der vorstehenden Ansprüche,
wobei die Abstützstruktur (10) senkrechte Pfosten (12), insbesondere vier senkrechte Pfosten (12), und horizontale Balken (18), die jeweils benachbarte obere Enden der vier senkrechten Pfosten (12) verbinden, umfasst.

3. Wärmetauscheranordnung (2) nach einem der vorstehenden Ansprüche,
wobei die Abstützstruktur (10) ferner schräge Verstärkungsstreben (20) umfasst, wobei jede schräge Verstärkungsstrebe (20) einen senkrechten Pfosten (12) mit einem horizontalen Balken (18) verbindet.

4. Wärmetauscheranordnung (2) nach einem der vorstehenden Ansprüche,
wobei der mindestens eine Wärmetauscher (4) einen ersten Verteiler (6a), einen zweiten Verteiler (6b) und eine Vielzahl von Rohren (22), insbesondere Rohre mit mehreren Anschlüssen und/oder Rohre, die mit Kühlrippen versehen sind, umfasst, wobei sich die Vielzahl von Rohren (22) zwischen dem ersten Verteiler (6a) und dem zweiten Verteiler (6b) erstreckt und mit dem ersten und zweiten Verteiler (6a, 6b) fluidverbunden ist.

5. Wärmetauscheranordnung (2) nach Anspruch 4,
wobei die Vielzahl von Rohren (22) bei Betrachtung in einem vertikalen Querschnitt eine I-Form aufweist;
wobei der erste Verteiler (6a) einen oberen Verteiler (6a) bildet und der zweite Verteiler (6b) einen unteren Verteiler (6b) bildet; und
wobei die seitlichen Endbereiche (8) des oberen Verteilers (6a) mit jeweiligen Verteilerabstützbereichen (14) der Abstützstruktur (10) verbunden sind, die sich an oberen Endbereichen (8) der Innenseiten gegenüberliegender Pfosten der Abstützstruktur (10) befinden.

6. Wärmetauscheranordnung (2) nach Anspruch 4,
wobei die Vielzahl von Rohren (22) bei Betrachtung in einem vertikalen Querschnitt eine V-Form oder eine U-Form aufweist;
wobei der erste Verteiler (6a) einen linken oberen Verteiler (6a) bildet und der zweite Verteiler (6b) einen rechten oberen Verteiler (6b) bildet;
wobei die seitlichen Endbereiche (8) des linken oberen Verteilers (6a) mit jeweiligen Verteilerabstützbereichen (14) der Abstützstruktur (10) verbunden sind, die sich an oberen Endbereichen (8) der Innenseiten gegenüberliegender Pfosten oder Balken der Abstützstruktur (10) befinden; und
wobei die seitlichen Endbereiche (8) des rechten oberen Verteilers (6b) mit jeweiligen Verteilerabstützbereichen (14) der Abstützstruktur (10) verbunden sind, die sich an oberen Endbereichen (8) der Innenseiten gegenüberliegender Pfosten oder Balken der Abstützstruktur (10) befinden.

7. Wärmetauscheranordnung (2) nach Anspruch 4,
wobei die Vielzahl von Rohren (22) bei Betrachtung in einem vertikalen Querschnitt eine J-Form aufweist;
wobei der erste Verteiler (6a) einen oberen Verteiler (6a) bildet und der zweite Verteiler (6b) einen unteren Verteiler (6b) bildet;
wobei die seitlichen Endbereiche (8) des oberen Verteilers (6a) mit jeweiligen Verteilerabstützbereichen (14) der Abstützstruktur (10) verbunden sind, die sich an oberen Endbereichen (8) der Innenseiten gegenüberliegender Pfosten der Abstützstruktur (10) befinden; und
wobei die seitlichen Endbereiche (8) des unteren Verteilers (6b) mit jeweiligen Verteilerabstützbereichen (14) der Abstützstruktur (10) verbunden sind, die sich an Zwischenbereichen der Innenseiten gegenüberliegender Pfosten der Abstützstruktur (10) befinden.

8. Wärmetauscheranordnung (2) nach einem der Ansprüche 5 bis 7,
umfassend zwei Wärmetauscher (4), die in einer gemeinsamen Abstützstruktur (10) aufgehängt sind, insbesondere zwei V-förmige Wärmetauscher (4), die derart angeordnet sind, dass ihre geneigten Bereiche (4b) einander zugewandt sind, oder insbesondere zwei J-förmige Wärmetauscher (4), die derart angeordnet sind, dass ihre gerundeten Bereiche (4c) einander zugewandt sind.

9. Wärmetauscheranordnung (2) nach einem der vorstehenden Ansprüche,
wobei mindestens einer der Verteiler (6a, 6b) einen Einlassanschluss und einen Auslassanschluss umfasst, wobei eine Innenwand, die innerhalb des mindestens einen Verteilers (6a, 6b) bereitgestellt ist, einen ersten Raum, der dem Einlassanschluss zugeordnet ist, und einen zweiten Raum, der dem Auslassanschluss zugeordnet ist, abteilt.

10. Wärmetauscheranordnung (2) nach einem der vorstehenden Ansprüche,
ferner umfassend einen Lüfter (24), der an der Abstützstruktur (10) angeordnet ist, insbesondere in einer horizontalen Weise zwischen gegenüberliegenden horizontalen Balken (18) der Abstützstruktur (10) und insbesondere über einem geneigten Bereich (4b) eines V-förmigen Wärmetauschers (4) oder über einem gerundeten Bereich (4c) eines J-förmigen oder U-förmigen Wärmetauschers (4).

11. Wärmetauscheranordnung (2) nach einem der vorstehenden Ansprüche,
wobei der mindestens eine Verteiler (6a, 6b) und/oder die Rohre (22) zumindest teilweise aus Metall, insbesondere aus Aluminium oder einer Aluminiumlegierung, gefertigt sind.

## Revendications

1. Agencement d'échangeur thermique (2) comprenant :
au moins un échangeur thermique (4) comportant au moins un collecteur sensiblement horizontal (6a, 6b) formant un côté supérieur de l'au moins un échangeur thermique (4), l'au moins un collecteur (6a, 6b) ayant des parties d'extrémité latérales (8) et
une structure de support (10) comportant
une partie principale comprenant, au moins partiellement, un matériau métallique, et
des parties de support de collecteur (14) associées à des parties d'extrémité latérales (8) respectives de l'au moins un collecteur (6a, 6b) ;
dans lequel les parties de support de collecteur (14) sont constituées au moins partiellement à partir d'un matériau non métallique et conçues pour recevoir les parties d'extrémité latérales (8) de l'au moins un collecteur (6a, 6b) afin d'empêcher l'au moins un collecteur (6a, 6b) d'entrer en contact avec toutes parties métalliques de la structure de support (10) ;
dans lequel les parties de support de collecteur (14) de la structure de support (10) sont formées comme des saillies non métalliques (15) situées au niveau des côtés intérieurs de montants (12) opposés de la structure de support (10) au niveau d'une position verticale correspondant à la position verticale de l'au moins un collecteur (6a, 6b) et les parties d'extrémité latérales (8) de l'au moins un collecteur (6a, 6b) sont supportées sur les saillies non métalliques (15) respectives ; et
**caractérisé en ce que**
l'au moins un échangeur thermique (4) est en contact avec la structure de support (10) uniquement par l'intermédiaire des parties d'extrémité latérales (8) de l'au moins un collecteur (6a, 6b) dans une configuration suspendue dans laquelle l'au moins un échangeur thermique (4) n'est pas supporté par le dessous.

2. Agencement d'échangeur thermique (2) selon l'une quelconque des revendications précédentes,
dans lequel la structure de support (10) comprend des montants verticaux (12), en particulier quatre montants verticaux (12), et des poutres horizontales (18) reliant respectivement des extrémités supérieures adjacentes des quatre montants verticaux (12) .

3. Agencement d'échangeur thermique (2) selon l'une quelconque des revendications précédentes,
dans lequel la structure de support (10) comprend en outre des entretoises de renfort inclinées (20), chaque entretoise de renfort inclinée (20) reliant un montant vertical (12) à une poutre horizontale (18).

4. Agencement d'échangeur thermique (2) selon l'une quelconque des revendications précédentes,
dans lequel l'au moins un échangeur thermique (4) comprend un premier collecteur (6a), un second collecteur (6b) et une pluralité de tubes (22), en particulier des tubes multicanaux et/ou des tubes pourvus d'ailettes, la pluralité de tubes (22) s'étendant entre le premier collecteur (6a) et le second collecteur (6b) et étant en communication fluidique avec les premier et second collecteurs (6a, 6b).

5. Agencement d'échangeur thermique (2) selon la revendication 4,
dans lequel la pluralité de tubes (22) ont une forme en I, lorsqu'ils sont vus en coupe verticale ;
dans lequel le premier collecteur (6a) forme un collecteur supérieur (6a) et le second collecteur (6b) forme un collecteur inférieur (6b) ; et
dans lequel les parties d'extrémité latérales (8) du collecteur supérieur (6a) sont reliées à des parties de support de collecteur (14) respectives de la structure de support (10) situées au niveau de parties d'extrémité supérieures (8) des côtés intérieurs de montants opposés de la structure de support (10) .

6. Agencement d'échangeur thermique (2) selon la revendication 4,
dans lequel la pluralité de tubes (22) ont une forme en V ou une forme en U, lorsqu'ils sont vus en coupe verticale ;
dans lequel le premier collecteur (6a) forme un collecteur supérieur gauche (6a) et le second collecteur (6b) forme un collecteur supérieur droit (6b) ;
dans lequel les parties d'extrémité latérales (8) du collecteur supérieur gauche (6a) sont reliées à des parties de support de collecteur (14) respectives de la structure de support (10) situées au niveau de parties d'extrémité supérieures (8) des côtés intérieurs de montants ou de poutres opposés de la structure de support (10) ; et
dans lequel les parties d'extrémité latérales (8) du collecteur supérieur droit (6b) sont reliées à des parties de support de collecteur (14) respectives de la structure de support (10) situées au niveau de parties d'extrémité supérieures (8) des côtés intérieurs de montants ou de poutres opposés de la structure de support (10).

7. Agencement d'échangeur thermique (2) selon la revendication 4,
dans lequel la pluralité de tubes (22) ont une forme en J, lorsqu'ils sont vus en coupe verticale ;
dans lequel le premier collecteur (6a) forme un collecteur supérieur (6a) et le second collecteur (6b) forme un collecteur inférieur (6b) ;
dans lequel les parties d'extrémité latérales (8) du collecteur supérieur (6a) sont reliées à des parties de support de collecteur (14) respectives de la structure de support (10) situées au niveau de parties d'extrémité supérieures (8) des côtés intérieurs de montants opposés de la structure de support (10) ; et
dans lequel les parties d'extrémité latérales (8) du collecteur inférieur (6b) sont reliées à des parties de support de collecteur (14) respectives de la structure de support (10) situées au niveau de parties intermédiaires des côtés intérieurs de montants opposés de la structure de support (10).

8. Agencement d'échangeur thermique (2) selon l'une quelconque des revendications 5 à 7,
comprenant deux échangeurs thermiques (4) suspendus dans une structure de support (10) commune, en particulier deux échangeurs thermiques (4) en forme de V agencés de sorte que leurs sections inclinées (4b) se font face ou en particulier deux échangeurs thermiques (4) en forme de J agencés de sorte que leurs sections arrondies (4c) se font face.

9. Agencement d'échangeur thermique (2) selon l'une quelconque des revendications précédentes,
dans lequel au moins l'un des collecteurs (6a, 6b) comprend un orifice d'entrée et un orifice de sortie, avec une paroi intérieure prévue à l'intérieur de l'au moins un collecteur (6a, 6b) subdivisant un premier espace associé à l'orifice d'entrée et un second espace associé à l'orifice de sortie.

10. Agencement d'échangeur thermique (2) selon l'une quelconque des revendications précédentes,
comprenant en outre un ventilateur (24) agencé sur la structure de support (10), en particulier de manière horizontale entre des poutres horizontales (18) opposées de la structure de support (10), et plus particulièrement au-dessus d'une partie inclinée (4b) d'un échangeur thermique (4) en forme de V ou au-dessus d'une partie arrondie (4c) d'un échangeur thermique (4) en forme de J ou en forme de U.

11. Agencement d'échangeur thermique (2) selon l'une quelconque des revendications précédentes,
dans lequel l'au moins un collecteur (6a, 6b) et/ou les tubes (22) sont au moins partiellement constitués de métal, en particulier d'aluminium ou d'un alliage d'aluminium.
